# EUROPEAN PATENT APPLICATION

(11) **EP 2 199 921 A1**
(43) Date of publication of application: **23.06.2010**
(21) Application number: 08748511.6
(22) Date of filing: 16.05.2008
(51) Int. Cl.: G06F 17/00

(54) **DIGITAL CONTENTS COUNTING SYSTEM AND METHOD**

(30) Priority: 10.10.2007 CN 200710175713
(71) Applicant: Peking University, Beijing 100871 (CN); Peking University Founder Group Co., Ltd, Haidian District Beijing 100871 (CN); Beijing Founder Apabi Technology Ltd, Beijing 100080 (CN)
(72) Inventor: TANG, Zhi, Beijing 100080 (CN); HUANG, Xiaojun, Beijing 100080 (CN)
(74) Representative: Cohausz & Florack
(86) International application number: PCT/CN2008/000959
(87) International publication number: WO 2009/046614

(57) **Abstract**

A digital content counting system and a method thereof are provided for achieving the credible transaction counting mechanism established between the owner of copyrights and the seller, to make the owner of copyrights and the seller collectively confirm the transaction information of the digital contents. The system comprises a sale subsystem, an authorization service subsystem and a transaction clearing subsystem; the sale subsystem and the authorization service subsystem authenticate each other; the transaction clearing subsystem and the authorization service subsystem authenticate each other; the transaction clearing subsystem authenticates the sale subsystem; the sale subsystem generates transaction request information according to a purchase list, sends the transaction request information to the authenticated authorization service subsystem, and records transaction success information; after receiving and confirming the transaction request information, the authorization service subsystem sends transaction success information to a client device, the sale subsystem and authenticated transaction clearing subsystem, sends an approach for obtaining an authorization file to the client device, records the transaction request information, and issues the authorization file; the transaction clearing subsystem records the transaction success information.

## Description

### Technical field

The present invention relates to the field of the copyright protection of digital contents, and particularly relates to the digital content counting technique.

### Background

Along with the fast development of the computer information technology and the Internet, there are more and more digital contents such as E-books, E-newspapers, audios and videos. The following pirate technique results in lots of illegal transaction and use of digital content, which brings huge economic loss to the owners of the copyrights of the related digital contents and obstructs the technical progress and the information dissemination. Thus, the protection of the digital contents during the information dissemination becomes more and more important.

The digital copyright protection technique is a key technique of the transaction and distribution of the digital contents. This technique is used to realize the protection of the intellectual property of the digital contents, and can control the use and distribution procedure of the digital contents. The current digital copyright protection technique is mainly with respect to the protection of the client device and the security communication mechanism between the client device and the authorized server. The protection of the client device includes binding the digital contents with the client device and controlling the time that the client device uses the digital contents in order to prevent the unauthorized operation, such as the copy of the digital contents performed by the client device. The security communication mechanism between the client device and the authorized server can safely transmit the digital contents from the authorized server to the client device after the transaction of the digital contents. The current digital copyright protection technique is merely adapted to the condition that the owner of the copyrights does not participate in the transaction procedure of the digital contents, that is, the transaction procedure is based on the trust of the owner of the copyrights to the seller, and the transaction clearing is processed according to the sale data provided by the seller; or the owner of the copyrights sells the digital contents itself, and no additional trust relationship needs to be established.

However, during the actual transaction of the digital contents, the owner of the copyrights does not completely trust the seller. Since no credible counting techniques required in the digital contents transaction between the owner of the copyrights and the seller are provided in the prior art, it cannot ensure that the transaction information will not be tampered, thereby the transaction and the distribution of the digital contents are affected.

### Summary

The embodiment of the present invention provides a digital content counting system and a method thereof so that a credible transaction counting mechanism is established between the owner of the copyrights and the seller, and the owner of the copyrights and the seller collectively confirm the transaction information of the digital content.

In order to solve the above technical problem, the present invention provides the following technical solution:
A digital content counting system is provided in an embodiment of the present invention, which comprises a sale subsystem, an authorization service subsystem and a transaction clearing subsystem, wherein:
   the sale subsystem and the authorization service subsystem authenticate identities with each other; the authorization service subsystem and the transaction clearing subsystem authenticate identities with each other; and the transaction clearing subsystem authenticates the identity of the sale subsystem;
   the sale subsystem for generating transaction request information according to a purchase list provided by a client device, sending the transaction request information to the authenticated authorization service subsystem, and recording transaction success information received from the authorization service subsystem;
   the authorization service subsystem for, after receiving and confirming the transaction request information, generating the transaction success information according to the transaction request information, sending the transaction success information to the authenticated sale subsystem and the authenticated transaction clearing subsystem, sending the transaction success information and the information of an approach for obtaining an authorization file for the digital content to the client device, recording the transaction request information, and issuing the authorization file to the client device according to authorization request information provided by the client device;
   and the transaction clearing subsystem for recording the transaction success information received from the authorization service subsystem.

A sale subsystem for digital content counting is provided in the embodiment of the present invention, which comprises:
a first authentication unit for authenticating the identity of the authorization service subsystem;
a first authentication information storage unit for storing a confirmation state of the authentication and a unique identifier of the authorization service subsystem after the authorization service subsystem passes the authentication of the first authentication unit;
a transaction request unit for generating the transaction request information according to the purchase list provided by the client device, and sending the transaction request information to the authorization service subsystem, in which the transaction request information comprises at least an identification number of the digital content and a unique identifier of the sale subsystem;
and a first transaction information recording unit for recording the transaction success information received from the authorization service subsystem.

An authorization service subsystem for digital content counting is provided in the embodiment of the present invention, which comprises:
a second authentication unit for authenticating the identities of the sale subsystem and the transaction clearing subsystem;
a second authentication information storage unit for storing a confirmation state of the authentication and a unique identifier of the sale subsystem after the sale subsystem passes the authentication of the second authentication unit, and storing a confirmation state of the authentication after the transaction clearing subsystem passes the authentication of the second authentication unit;
a transaction request authentication unit for generating, after receiving and confirming the transaction request information sent by the authenticated sale subsystem, the transaction success information according to the transaction request information, sending the transaction success information to the sale subsystem and the authenticated transaction clearing subsystem, and sending the transaction success information and the information of an approach for obtaining an authorization file for the digital content to the client device, in which the transaction success information comprises at least a transaction order number and an identification number of the digital content;
and a second transaction information recording unit for recording the transaction request information.

A transaction clearing subsystem for digital content counting is provided in the embodiment of the present invention, which comprises:
a third authentication unit for authenticating the identities of the sale subsystem and the authorization service subsystem;
a third authentication information storage unit for storing a confirmation state of the authentication and a unique identifier of the sale subsystem after the sale subsystem passes the authentication of the third authentication unit, and storing a confirmation state of the authentication and a unique identifier of the authorization service subsystem after the authorization service subsystem passes the authentication of the third authentication unit;
a third transaction information recording unit for recording the transaction success information received from the authorization service subsystem.

A method for counting digital contents by using the above digital content counting system is provided in an embodiment of the present invention, which comprises the following steps:
the sale subsystem and the authorization service subsystem authenticate identities with each other; the authorization service subsystem and the transaction clearing subsystem authenticate identities with each other; and the transaction clearing subsystem authenticates the identity of the sale subsystem;
the authenticated sale subsystem generates transaction request information according to a purchase list provided by the client device, and sends the transaction request information to the authenticated authorization service subsystem;
the authorization service subsystem, after receiving and confirming the transaction request information, generates the transaction success information according to the transaction request information, sends the transaction success information to the sale subsystem and the authenticated transaction clearing subsystem, and sends the transaction success information and the information of an approach for obtaining an authorization file for the digital content to the client device; and
the authorization service subsystem records the transaction request information, and the sale subsystem and the transaction clearing subsystem receive and record the transaction success information.

In the digital content counting system and method provided in an embodiment of the present invention, the digital content is transacted by the authenticated authorization service subsystem and the authenticated sale subsystem, and the transaction information of the digital content is recorded by the authorization service subsystem, the sale subsystem and the authenticated third-party transaction clearing subsystem, respectively, thereby a credible transaction counting mechanism is established between the owner of the copyrights and the seller, and the owner of the copyrights and the seller collectively confirm the transaction information of the digital content.

### Brief Description of the Drawings

FIG. 1 is a schematic diagram of a digital content counting system in the embodiment of the present invention;
FIG. 2 is a schematic structural diagram of the digital content counting system in the embodiment of the present invention;
FIG. 3 is a flow chart of a digital content counting method in the embodiment of the present invention;
FIG. 4 is a flow chart of a digital content counting method in the embodiment of the present invention;
FIG. 5 is a flow chart of a digital content counting method in the first embodiment of the present invention; and
FIG. 6 is a flow chart of a digital content counting method in the second embodiment of the present invention.

### Detailed Description

The digital content counting system and method provided in an embodiment of the present invention is adapted to the copyright protection for digital contents such as E-books, E-newspapers, E-periodicals, digital audios and digital videos of the owner of the copyrights.

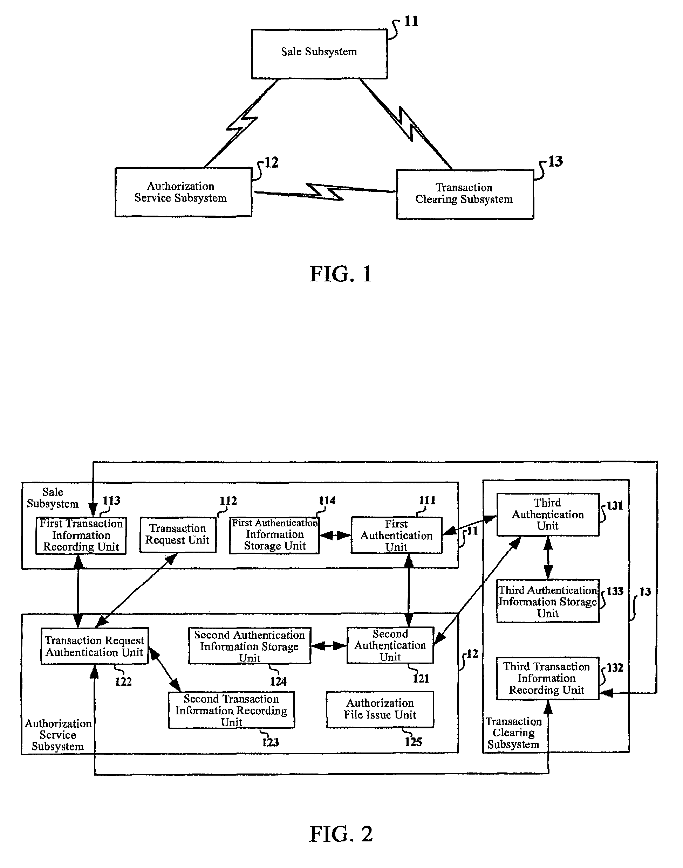

As shown in FIG. 1, a digital content counting system provided in the embodiment of the present invention comprises a sale subsystem 11, an authorization service subsystem 12 and a transaction clearing subsystem 13, wherein:
the sale subsystem 11 and the authorization service subsystem 12 authenticate identities with each other; the authorization service subsystem 12 and the transaction clearing subsystem 13 authenticate identities with each other; and the transaction clearing subsystem 13 authenticates the identity of the sale subsystem 11;
the sale subsystem 11 for generating transaction request information according to a purchase list provided by a client device, sending the transaction request information to the authenticated authorization service subsystem 12, and recording transaction success information received from the authorization service subsystem 12;
the authorization service subsystem 12 for, after receiving and confirming the transaction request information, generating the transaction success information according to the transaction request information, sending the transaction success information to the authenticated sale subsystem 11 and the authenticated transaction clearing subsystem 13, sending the transaction success information and the information of an approach for obtaining an authorization file for the digital content to the client device, recording the transaction request information, and issuing the authorization file to the client device according to authorization request information provided by the client device;
and the transaction clearing subsystem 13 for recording the transaction success information received from the authorization service subsystem 12.

Wherein, the sale subsystem 11 stores a fixed unique identifier for distinguishing the sale subsystem 11 from other sale subsystems, in which the unique identifier can be configured previously, or generated by the sale subsystem 11 itself during installation of the sale subsystem 11.

As shown in FIG. 2, the sale subsystem 11 further comprises the following units:
a first authentication unit 111 for authenticating the identity of the authorization service subsystem 12;
a first authentication information storage unit 114 for storing a confirmation state of the authentication and a unique identifier S-ID2 of the authorization service subsystem 12 after the identity of the authorization service subsystem 12 passes the authentication of the first authentication unit 111;
a transaction request unit 112 for, after the identity of the authorization service subsystem 12 passes the authentication of the first authentication unit 111, the identity of the sale subsystem 11 passes the authentication of the authorization service subsystem 12 and the transaction clearing subsystem 13, respectively, and the authorization service subsystem 12 and the transaction clearing subsystem 13 pass the identity authentication of the counterpart, respectively, generating the transaction request information according to the purchase list provided by the client device, and sending the transaction request information to the authorization service subsystem 12, in which the transaction request information comprises at least an identification number of the digital content and a unique identifier S-ID1 of the sale subsystem 11;
and a first transaction information recording unit 113 for recording the transaction success information received from the authorization service subsystem 12, and sending the recorded transaction success information, the unique identifier S-ID1 of the sale subsystem 11 and the unique identifier S-ID2 of the authorization service subsystem 12 stored by the first authentication information storage unit 114 to the transaction clearing subsystem 13.

Wherein, the first authentication unit 111 also can be used to authenticate the identity of the transaction clearing subsystem 13; the first authentication information storage unit 114 also can be used to store a confirmation state of the authentication after the identity of the transaction clearing subsystem 13 passes the authentication of the first authentication unit 111.

The authorization service subsystem 12 also stores a fixed unique identifier for distinguishing the authorization service subsystem 12 from other authorization service subsystems, in which the unique identifier can be configured previously, or generated by the authorization service subsystem 12 itself during installation of the authorization service subsystem 12.

The authorization service subsystem 12 further comprises the following units:
a second authentication unit 121 for authenticating the identities of the sale subsystem 11 and the transaction clearing subsystem 13;
a second authentication information storage unit 124 for storing a confirmation state of the authentication and a unique identifier S-ID1 of the sale subsystem 11 after the identity of the sale subsystem 11 passes the authentication of the second authentication unit 121, and storing a confirmation state of the authentication after the identity of the transaction clearing subsystem 13 passes the authentication of the second authentication unit 121;
a transaction request authentication unit 122 for generating, after receiving and confirming the transaction request information sent by the authenticated sale subsystem 11, the transaction success information according to the transaction request information, sending the transaction success information to the sale subsystem 11 and the authenticated transaction clearing subsystem 13, and sending the transaction success information and the information of an approach for obtaining an authorization file for the digital content to the client device, in which the transaction success information comprises at least a transaction order number and an identification number of the digital content; wherein the transaction request authentication unit 122 is also used to send the unique identifier S-ID2 of the authorization service subsystem 12 and the unique identifier S-ID1 of the sale subsystem 11 to the transaction clearing subsystem 13;
a second transaction information recording unit 123 for recording the transaction request information;
and an authorization file issue unit 125 for, after the transaction request authentication unit 122 sends the transaction success information and the information of an approach for obtaining an authorization file for the digital content to the client device, generating the authorization file of the digital content according to the authorization request information comprising at least the identifier of the purchaser and the order information generated and sent by the client device, and issuing the authorization file to the client device, wherein the order information comprises at least the transaction order number and the identification number of the digital content.

The transaction clearing subsystem 13 further comprises the following units:
a third authentication unit 131 for authenticating the identities of the sale subsystem 11 and the authorization service subsystem 12;
a third authentication information storage unit 133 for storing a confirmation state of the authentication and a unique identifier S-ID1 of the sale subsystem 11 after the identity of the sale subsystem 11 passes the authentication of the third authentication unit 131, and storing a confirmation state of the authentication and a unique identifier S-ID2 of the authorization service subsystem 12 after the identity of the authorization service subsystem 12 passes the authentication of the third authentication unit 131;
and a third transaction information recording unit 132 for recording the transaction success information received from the authorization service subsystem 12.

Wherein, when the information is transmitted among the above units shown in FIG. 2, after successfully receiving the information, the unit for receiving the information usually returns transmission success information to the unit for sending the information. Thus, in FIG. 2, the arrows indicating the direction of the signal flowing among the units are bi-directional arrows, but the condition that the unit for receiving the information does not return transmission success information to the unit for sending the information is not excluded.

A sale subsystem for digital content counting is further provided in the embodiment of the present invention, which comprises a first authentication unit, a first authentication information storage unit, a transaction request unit and a first transaction information recording unit as described above, and the operation principles of them are the same as above, which will not be described in detail.

An authorization service subsystem for digital content counting is further provided in the embodiment of the present invention, which comprises a second authentication unit, a second authentication information storage unit, a transaction request authentication unit, a second transaction information recording unit and an authorization file issue unit as described above, and the operation principles of them are the same as above, which will not be described in detail.

A transaction clearing subsystem for digital content counting is further provided in the embodiment of the present invention, which comprises a third authentication unit, a third authentication information storage unit and a third transaction information recording unit as described above, and the operation principles of them are the same as above, which will not be described in detail.

In addition, the authorization service subsystem is installed in a server set by the owner of copyrights for the authorization service subsystem. The sale subsystem is installed in a server of an E-business website for the digital content of the seller or the owner of copyrights. The purchaser is notified of the E-business website for the digital content, and the purchaser inputs a purchase list of the digital content (including the name of the digital content and the number of copies to be purchased) to the sale subsystem on the website provided by the sale subsystem by using an input interface of a client device (such as computer, PDA, mobile phone). The transaction clearing subsystem is installed in a third-party transaction clearing center which is independent of the owner of copyrights and the seller.

After the subsystems are installed, the method for counting digital contents by using the above digital content counting system provided in an embodiment of the present invention comprises the following procedures:

### 1. A procedure of identity authentication among the subsystems

Only after the subsystems authenticate the identities with each other, the transaction of the digital content can begin.

The procedure of identity authentication is as follows: the authorization service subsystem and the transaction clearing subsystem authenticate the identities with each other, and the authorization service subsystem stores the confirmation state of the authentication, and the transaction clearing subsystem stores the confirmation state of the authentication and the unique identifier S-ID2 of the authorization service subsystem after the identities of the authorization service subsystem and the transaction clearing subsystem pass the authentication respectively; the authorization service subsystem and the sale subsystem authenticate the identities with each other, and the authorization service subsystem and the sale subsystem respectively store the confirmation state of the authentication and a unique identifier of the counterpart after the identities of the authorization service subsystem and the sale subsystem pass the authentication respectively; the transaction clearing subsystem authenticates the identity of the sale subsystem, and stores the confirmation state of the authentication and the unique identifier S-ID1 of the sale subsystem after the identity of the sale subsystem passes the authentication.

The above subsystems merely need to perform the above procedure of identity authentication with each other for one time before the transaction of the digital content of the first time, and the following transaction of the digital content does not need above procedure of identity authentication. The reason is that each of the subsystems stores the confirmation state of the authentication and the unique identifier of the counterpart; thereby each of the subsystems can identify the above subsystems, which pass the authentication during the transaction of the digital content, at any time. Therefore, each of the subsystems needs to perform the above procedure of identity authentication for only one time in the whole procedure of the transaction of the digital content.

The identity authentication method can be a general method in the information security field, for example, the digital signature method based on the digital certificate, etc.

The object of the identity authentication among the above subsystems is to ensure the legitimacy of the identities of the subsystems in order to avoid that an illegal authorization service subsystem, an illegal transaction clearing subsystem or an illegal sale subsystem participates in the transaction of the digital content during the transaction.

### 2. A transaction procedure

After each of the above subsystems passes the identity authentication, when the purchaser purchases the digital content, the purchaser performs the purchase operation by means of the client device through the sale subsystem installed in a network E-book store.

The sale subsystem generates the transaction request information according to the purchase list of the digital content provided by the purchaser by means of the client device, and sends the transaction request information to the authorization service subsystem. The transaction request information comprises at least an identification number of the digital content and a unique identifier S-ID1 of the sale subsystem. After confirming the transaction request information, the authorization service subsystem generates the transaction success information according to the transaction request information, sends the transaction success information to the sale subsystem and the transaction clearing subsystem, and sends the transaction success information and the information of an approach for obtaining an authorization file for the digital content to the client device. The authorization service subsystem records the transaction request information, and the sale subsystem and the transaction clearing subsystem receive and record the transaction success information respectively. The authorization service subsystem also can send the transaction success information, the unique identifier S-ID2 of the authorization service subsystem and the unique identifier S-ID1 of the sale subsystem to the transaction clearing subsystem.

The client device generates the authorization request information according to the transaction success information, and sends the authorization request information to the authorization service subsystem. The authorization request information comprises at least an identifier S-ID4 of the purchaser and the order information. The authorization service subsystem generates an authorization file according to the authorization request information, and issues the authorization file to the client device. Then, the purchaser can obtain the digital content from the owner of copyrights by means of the client device and the authorization file.

Furthermore, the authorization service subsystem can send information of authorization completion to the transaction clearing subsystem so that the transaction clearing subsystem records more complete transaction information.

Since the transaction clearing subsystem stores the transaction success information of the authorization service subsystem and the sale subsystem, the transaction clearing subsystem can get the transaction information of the digital content according to statistics. Meanwhile, since the authorization service subsystem stores the transaction request information, and the sale subsystem stores the transaction success information, the statistical transaction information from the authorization service subsystem, the sale subsystem and the transaction clearing subsystem should be consistent with each other. Furthermore, if the authorization service subsystem makes digital signatures on the transaction success information, the unique identifier S-ID2 of the authorization service subsystem and the unique identifier S-ID1 of the sale subsystem and then sends them to the transaction clearing subsystem, the transaction information sent from the authorization service subsystem to the transaction clearing subsystem are not tamperable so as to achieve the object that the owner of copyrights and the seller collectively confirm the transaction information.

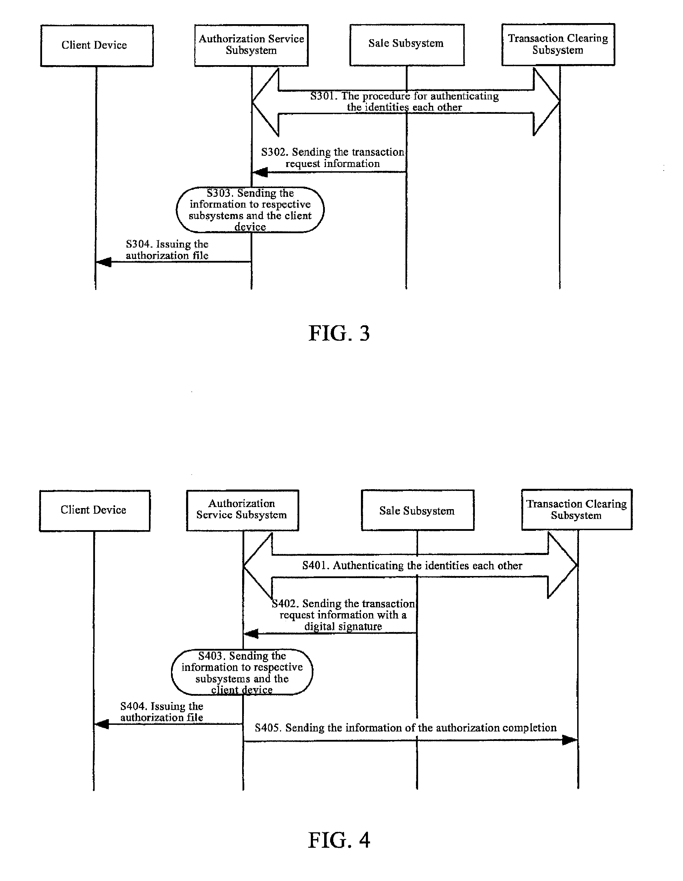

As shown in FIG. 3, the detailed flow of a method for counting digital contents by using the above digital content counting system provided in an embodiment of the present invention is as follows:
S301. The sale subsystem and the authorization service subsystem authenticate identities with each other; the authorization service subsystem and the transaction clearing subsystem authenticate identities with each other; and the transaction clearing subsystem authenticates the identity of sale subsystem.
S302. The authenticated sale subsystem generates transaction request information according to a purchase list provided by the client device, and sends the transaction request information to the authenticated authorization service subsystem.

The client device can be a computer, a PDA, a mobile phone and so on in the network. The purchaser provides the purchase list to the sale subsystem through the input interface of the client device.

The transaction request information comprises at least an identification number of the digital content and a unique identifier S-ID1 of the sale subsystem.

S303. After receiving and confirming the transaction request information, the authorization service subsystem records the transaction request information, generates the transaction success information according to the transaction request information, sends the transaction success information to the sale subsystem and the authenticated transaction clearing subsystem to be recorded, and sends the transaction success information and the information of an approach for obtaining an authorization file for the digital content to the client device. Then, the procedure goes to step S304.

The transaction success information comprises at least a transaction order number OrderID and an identification number Book1-ID corresponding to the digital content. The approach for obtaining an authorization file for the digital content can be a network address in which the authorization file for the digital content is downloaded or an Email box to which the authorization file for the digital content is sent.

The manner of returning the transaction success information and the information of an approach for obtaining an authorization file for the digital content to the client device can be sending it via Email or the client device directly downloading it from the authorization service subsystem.

If it fails to pass the authentication, the procedure ends.

S304. The authorization service subsystem generates the authorization file for the digital content according to the authorization request information comprising at least an identifier S-ID4 of the purchaser and the order information generated and sent by the client device, and sends the authorization file to the client device.

The order information comprises at least a transaction order number OrderID and an identification number Bookl-ID corresponding to the digital content.

In step S304, if a special software for reading the authorization file, which can control the reading times or the copy behavior of the client device according to the authorization file, is installed in the client device, the copyright of the digital content can be protected more securely.

Hitherto, a first-time transaction procedure of the digital content is finished, and the following transaction procedures of the digital content will be performed according to above steps S301-S304.

When the above steps S301 - S304 are performed, in step S301, the transaction clearing subsystem and the sale subsystem can authenticate the identities with each other; in steps S302 - S304, the security protection can be performed on the information transmitted among the subsystems; in step 303, when sending the transaction success information to the transaction clearing subsystem, the authorization service subsystem can also send the unique identifier S-ID2 of the authorization service subsystem and the unique identifier S-ID1 of the sale subsystem to the transaction clearing subsystem so as to distinguish it from the transaction success information between other authorization service subsystems and other transaction clearing subsystems; and after step S304, the authorization service subsystem can send information of the authorization completion to the transaction clearing subsystem so that the transaction clearing subsystem can record more complete transaction information.

In the following part, the method for counting digital contents provided in an embodiment of the present invention will be described in detail with reference of a detailed embodiment. This detailed embodiment is different from the above steps S301 - S304 in that the transaction clearing subsystem and the sale subsystem authenticate the identities with each other; the security protection is performed on the information transmitted among the subsystems; the authorization service subsystem sends the transaction success information, the unique identifier S-ID2 of the authorization service subsystem and the unique identifier S-ID1 of the sale subsystem to the transaction clearing subsystem; and the authorization service subsystem sends information of the authorization completion to the transaction clearing subsystem after the authorization completes. As shown in FIG. 4, the detailed flow of the method for counting digital contents provided in an embodiment of the present invention is as follows:
Step S401. The authorization service subsystem and the transaction clearing subsystem authenticate the identities with each other, and they respectivly store the confirmation state of the authentication after they pass the authentication, the transaction clearing subsystem stores the unique identifier S-ID2 of the authorization service subsystem; the authorization service subsystem and the sale subsystem authenticate the identities with each other, and they respectivly store the confirmation state of the authentication and the unique identifier of the counterpart after they pass the authentication; the transaction clearing subsystem and the sale subsystem authenticate the identities with each other, and they respectivly store the confirmation state of the authentication after they pass the authentication, the transaction clearing subsystem stores the unique identifier S-ID1 of the sale subsystem.
Step S402. The sale subsystem generates transaction request information according to a purchase list provided by the client device, and sends the transaction request information with a digital signature to the authorization service subsystem.

The transaction request information with the digital signature can prevent the network attack such as the replay attack.

Step S403. After the authorization service subsystem receives the transaction request information, and the transaction request information and the digital signature pass the authentication, the authorization service subsystem records the transaction request information, sends the transaction success information to the sale subsystem to be recorded, sends the transaction success information and the information of an approach for obtaining an authorization file for the digital content to the client device, and the authorization service subsystem or the sale subsystem sends the transaction success information, the unique identifier S-ID2 of the authorization service subsystem and the unique identifier S-ID1 of the sale subsystem with digital signatures to the transaction clearing subsystem to be recorded. Then, the procedure goes to step S404.

If it fails to pass the authentication, the procedure ends.

Step S404. The authorization service subsystem receives the authorization request information comprising at least an identifier S-ID4 of the purchaser and the order information generated and sent by the client device, generates the authorization file for the digital content according to the authorization request information, and sends the authorization file and the identifier S-ID4 of the purchaser bound together to the client device.

Binding the authorization file with the identifier S-ID4 of the purchaser can ensure that the authorization file is used by a legal client device.

Step S405. The authorization service subsystem sends the information of the authorization completion of this time to the transaction clearing subsystem to be recorded.

Then, when the purchaser purchases the digital content by means of the client device via the sale subsystem again, or other purchasers purchase the digital content by means of the client device via the sale subsystem, only steps S402 - S405 need to be performed except for step S401; that is, as long as each of the above subsystems has performed the procedure of identity authentication of step S401 for one time, and stores the confirmation state of the authentication and the unique identifier of the counterpart after they pass the authentication, each of the above subsystems need not to perform the procedure of identity authentication with each other of step S401 in the transaction procedure at the following transactions.

Wherein, in above step S402, when the purchaser purchases a plurality of digital contents at one time, the manner in which the sale subsystem generates the transaction request information can be that a plurality of transaction request information is generated with respect to each of the digital contents respectively, or one piece of transaction request information is generated with respect to the same publisher.

If a plurality of transaction request information is generated with respect to each of the digital contents respectively, each of the plurality of transaction request information comprises at least an identification number of the digital content and a unique identifier S-ID1 of the sale subsystem. Correspondingly, in step S403, the authorization service subsystem should authenticate each of the plurality of transaction request information, and generate the transaction success information after the authentication is passed; the authorization service subsystem respectively sends these transaction success information to the sale subsystem, and respectively sends these transaction success information and the information of an approach for obtaining an authorization file for the corresponding digital content to the client device; the authorization service subsystem or the sale subsystem respectively sends these transaction success information, the unique identifier S-ID2 of the authorization service subsystem and the unique identifier S-ID1 of the sale subsystem with the digital signatures to the transaction clearing subsystem; the authorization service subsystem and the sale subsystem record transaction information with respect to each of the transactions. In step S404, the client device generates one piece of authorization request information with respect to each piece of transaction success information and sends it to the authorization service subsystem; the authorization service subsystem generates one authorization file with respect to each piece of authorization request information and returns it to the client device.

If one piece of transaction request information is generated with respect to the same publisher, the transaction request information should comprise at least the identification number of each of the digital contents and the unique identifier S-ID1 of the sale subsystem. The following operations are the same as those of steps S403 - S405.

In the following part, the method for counting digital contents provided in an embodiment of the present invention will be described in detail with reference of the detailed embodiments:

### EMBODIMENT 1

The embodiment 1 in the present invention relates to the reader, the publisher, the network E-book store, and the third-party transaction clearing center.

The publisher publishes E-books, and installs the authorization service subsystem in a server. During the installation, the authorization service subsystem automatically generates a unique identifier S-ID2, which is stored in the authorization service subsystem. The generated unique identifier S-ID2 is unchangeable. The sale subsystem is installed in the network E-book store, during which the sale subsystem automatically generates a unique identifier S-ID1, which is stored in the sale subsystem. The generated unique identifier S-ID1 is unchangeable. The transaction clearing subsystem is installed in a third-party transaction clearing center.

Wherein, the publisher performs copyright protection to the E-book by using the authorization service subsystem. The copyright protection manner includes, but not limited to, an encryption operation and key management to the E-book and the metadata management such as the price, the title, the book number and the unique identifier of the E-book. The network E-book store provides the sale website for the E-book to the reader by means of the sale subsystem, and the sale mode is to sell books one by one.

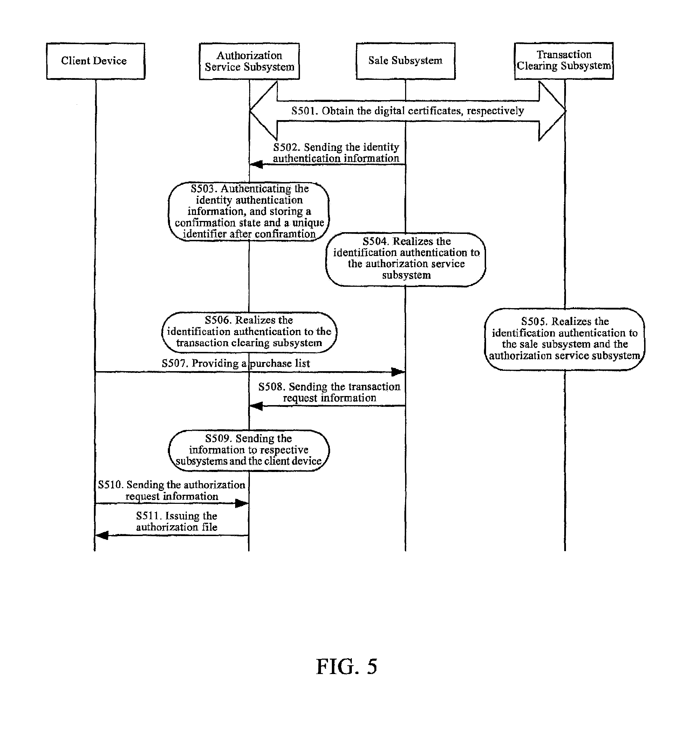

As shown in FIG. 5, the method for counting digital contents provided in the embodiment 1 of the present invention comprises the following steps in detail:
Step S501. The authorization service subsystem, the sale subsystem and the transaction clearing subsystem obtain the respective digital certificate from the digital certificate issuing organization.
Step S502. The sale subsystem performs message digest to the name n of the network E-book store and the unique identifier S-ID1 of the sale subsystem and generates H(n, S-ID1). Then, the sale subsystem encrypts H(n, S-ID1) with a private key Ki1 corresponding to the digital certificate of the sale subsystem, and generates Ki1(H(n, S-ID1)). In order to prevent the interception, the sale subsystem encrypts Ki1(H(n, S-ID1)) with a public key Kp2 corresponding to the digital certificate of the authorization service subsystem, and obtains Kp2(Ki1(H(n, S-ID1))). The sale subsystem sends Kp2(Ki1(H(n, S-ID1))) to the authorization service subsystem.

Wherein, since the public key Kp2 corresponding to the digital certificate of the authorization service subsystem is public, the sale subsystem can obtain the public key Kp2 corresponding to the digital certificate of the authorization service subsystem in various ways, for example, the authorization service subsystem sends Kp2 to the sale subsystem.
Step S503. The authorization service subsystem decrypts Kp2(Ki1(H(n, S-ID1))) with a private key Ki2 corresponding to the digital certificate of the authorization service subsystem, decrypts Ki1(H(n, S-ID1)) with a public key Kp1 corresponding to the digital certificate of the sale subsystem to obtain H(n, S-ID1), then authenticates whether it is the message digest of n and S-ID1;

If it is the message digest, the sale subsystem passes the identity authentication of the the authorization service subsystem, the authorization service subsystem stores the information of n and S-ID1, and the procedure goes to step S504;

If it is not the message digest, the identity authentication fails, and the procedure ends.

Wherein, since the public key Kp1 corresponding to the digital certificate of the sale subsystem is public, the authorization service subsystem can obtain the public key Kp1 corresponding to the digital certificate of the sale subsystem in various ways, for example, the sale subsystem sends Kp1 to the authorization service subsystem.

Step S504. By the same method as that in Steps S502 and S503, the authorization service subsystem sends the identity authentication relatated informaiton such as the publisher name and S-ID2 to the sale subsystem. After the sale subsystem receives and confirms such information, the sale subsystem stores the publisher name and S-ID2 of the authorization service subsystem. Thus, the sale subsystem realizes the identity authentication of the authorization service subsystem.

Step S505. By the same method as that in Steps S502 and S503, the transaction clearing subsystem realizes the identities authentication of the sale subsystem and the authorization service subsystem.

Step S506. By the same method as that in Steps S502 to S504, the transaction clearing subsystem sends the name of the transaction clearing subsystem (since the transaction clearing subsystem does not has a unique identifier) to the authorization service subsystem. After the authorization service subsystem receives and confirms the name of the transaction clearing subsystem, the authorization service subsystem stores it. Thus, the authorization service subsystem realizes the identity authentication of the transaction clearing subsystem.

Step S507. The reader provides a purchase list to the sale subsystem by means of the client device A, and the purchase list comprises the name of the E-book Book1 and the number of the copies of the E-book Book1.

Step S508. The sale subsystem generates transaction request information according to the purchase list, and makes a digital signature on the transaction request information, then sends it to the authorization service subsystem.

The transaction request information comprises a transaction order number OrderID, an identification number Bookl-ID corresponding to Book1, a unique identifier S-ID1 of the sale subsystem, the number Num that Book1 will be purchased, the time Time at which information is sent, etc. Wherein, the transaction order number OrderID is automatically generated by the sale subsystem, the identification number Bookl-ID corresponding to Book1 is obtained by searching in a database by the sale subsystem according to the name of Book1.

Making a digital signature on the transaction request information is to add digital signature information Signature(OrderID, Bookl-ID, S-ID1, Num, Time) to the transaction request information. Making the digital signature on the transaction request information can prevent the network attack such as the replay attack.

Step S509. After the authorization service subsystem receives the transaction request information and the transaction request information and its digital signature pass the authentication, the authorization service subsystem records transaction request information, and generates transaction success information according to the information items comprised in the transaction request information. The authorization service subsystem makes digital signatures on the transaction success information, S-ID1 and S-ID2, and sends them to the transaction clearing subsystem to be recorded. The authorization service subsystem sends the transaction success information to the sale subsystem to be recorded, and sends the transaction success information and the address Book1-URL information through which the authorization file for the E-book is obtained to the client device A.

The transaction success information comprises at least the transaction order number OrderID and the identification number Bookl-ID corresponding to Book1.

Step S510. After receiving the transaction success information and the address Book1-URL information through which the authorization file for the E-book is obtained, the client device A sends authorization request information to the authorization service subsystem through a website whose network address is Book1-URL. The authorization request information comprises an identifier S-ID4 of the reader, OrderID, Book1-ID and Num.

Wherein, the identifier S-ID4 of the reader can be the characteristic value of the client device A.

Step S511. The authorization service subsystem generates an authorization file according to the information in the authorization request information, and binds the authorization file with the identifier S-ID4 of the reader, then issues it to the client device A.

Then, when the reader purchases the digital content via the sale subsystem again or other purchasers purchase the digital content via the sale subsystem, steps S507 to S511 are performed.

### EMBODIMENT 2

The embodiment 2 of the present invention relates to a library, a publisher, an E-book issuer, a third-party transaction clearing center which is independent of the publisher and the E-book issuer.

The publisher publishes E-book, and installs the authorization service subsystem in a server. During the installation, the authorization service subsystem automatically generates a unique identifier S-ID2, which is stored in the authorization service subsystem. The generated unique identifier S-ID2 is unchangeable. The sale subsystem is installed in the network E-book store of the E-book issuer, during which the sale subsystem automatically generates a unique identifier S-ID1, which is stored in the sale subsystem. The generated unique identifier S-ID1 is unchangeable. The transaction clearing subsystem is installed in a third-party transaction clearing center which is independent of the publisher and the E-book issuer.

Wherein, the publisher performs copyright protection to the E-book by using the authorization service subsystem. The copyright protection manner includes, but not limited to, an encryption operation and key management to the E-book and the metadata management such as the price, the title, the book number and the unique identifier of the E-book. The E-book issuer performs bulk sales of E-books to the library by means of the sale subsystem.

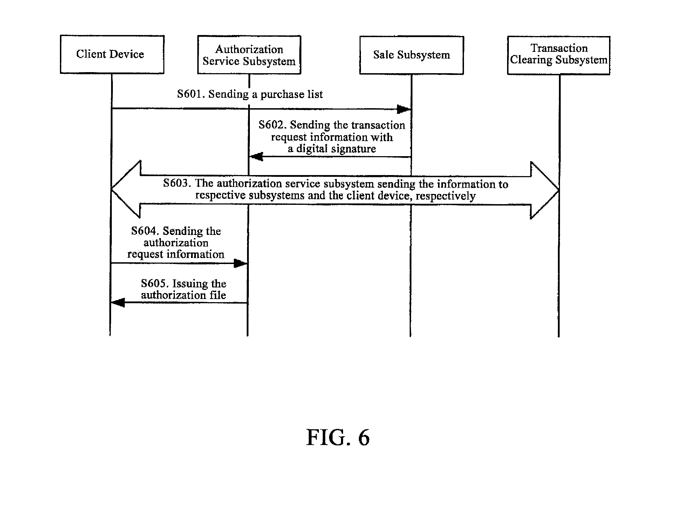

In the embodiment 2, the identity authentication procedure among the authorization service subsystem, the sale subsystem and the transaction clearing subsystem is the same as that in steps S501 to S506 in the embodiement 1, which will not be described herein. As shown in FIG. 6, after all of the subsystems pass the identities authentication with each other, the following steps are performed:
Step S601. When a library performs bulk buying of E-books from the E-book issuer, the library provides a purchase list L to the sale subsystem by means of a client device B, the purchase list L comprises at least the unique identifier of each kind of book, the number of copies of each kind of book to be purchased, etc.
Step S602. The sale subsystem generates transaction request information according to the purchase list L, and makes a digital signature on the transaction request information, then sends it to the authorization service subsystem.

The transaction request information comprises a transaction order number OrderID, a purchase list L, a unique identifier S-ID1 of the sale subsystem, a time Time at which information is sent, etc. Wherein, the transaction order number OrderID is automatically generated by the sale subsystem.

The method for making the digital signature on the transaction request information is to add digital signature information Signature(OrderID, L, S-ID1, Time) to the transaction request information. Making the digital signature on the transaction request information can prevent the network attack such as the replay attack.

Step S603. After the authorization service subsystem receives the transaction request information and the transaction request information and its digital signature pass the authentication, the authorization service subsystem records transaction request information, and generates transaction success information according to the information items comprised in the transaction request information. The authorization service subsystem sends the transaction success information to the sale subsystem to be recorded, sends the transaction success information and the address Book1-URL information through which the authorization file for the E-book is obtained to the client device B, and sends the transaction success information, S-ID1 and S-ID2 with digital signatures to the transaction clearing subsystem to be recorded.

The transaction success information comprises at least the transaction order number OrderID and the purchase list L.

Step S604. After the client device B receives the transaction success information and the address Book1-URL information through which the authorization file for the E-book is obtained, the library sends authorization request information to the authorization service subsystem through a website whose network address is Book1-URL by means of the client device B. The authorization request information comprises an identifier S-ID4 of the library, OrderID and L. Wherein, the identifier S-ID4 of the library can be the characteristic value of the E-book service system in the library.

Step S605. The authorization service subsystem issues an authorization file, which is bound with the identifier S-ID4 of the library, to the client device B according to the information in the authorization request information sent from the client device B,.

Then, when the library purchases the digital content via the sale subsystem again or other purchasers purchase the digital content via the sale subsystem, steps S601 to S605 are performed.

In the digital content counting system and method provided in an embodiment of the present invention, the digital content is transacted by the authenticated authorization service subsystem and the authenticated sale subsystem, and the transaction information of the digital content is recorded by the authorization service subsystem, the sale subsystem and the authenticated third-party transaction clearing subsystem, respectively, thereby a credible transaction counting mechanism is established between the owner of the copyrights and the seller, and the owner of the copyrights and the seller collectively confirm the transaction information of the digital content.

Obviously, a person skilled in the field may modify or change the present invention within the spirit and scope of the present invention. Thus, if the modifications or changes for the present invention are within the scopes of the claims of the present invention and equal techniques, the present invention would like to include these modifications and changes.

## Claims

1. A digital content counting system, which is **characterized in** comprising a sale subsystem, an authorization service subsystem and a transaction clearing subsystem, wherein:
the sale subsystem and the authorization service subsystem authenticate identities with each other; the authorization service subsystem and the transaction clearing subsystem authenticate identities with each other; and the transaction clearing subsystem authenticates identity of the sale subsystem;
the sale subsystem for generating transaction request information according to a purchase list provided by a client device, sending the transaction request information to the authenticated authorization service subsystem, and recording transaction success information received from the authorization service subsystem;
the authorization service subsystem for generating, after receiving and confirming the transaction request information, the transaction success information according to the transaction request information, sending the transaction success information to the authenticated sale subsystem and the authenticated transaction clearing subsystem, sending the transaction success information and information of an approach for obtaining an authorization file for the digital content to the client device, recording the transaction request information, and issuing the authorization file to the client device according to authorization request information provided by the client device; and
the transaction clearing subsystem for recording the transaction success information received from the authorization service subsystem.

2. The digital content counting system according to claim 1, **characterized in that** the sale subsystem further comprises:
a first authentication unit for authenticating the identity of the authorization service subsystem;
a first authentication information storage unit for storing a confirmation state of the authentication and a unique identifier of the authorization service subsystem after the authorization service subsystem passes the authentication of the first authentication unit;
a transaction request unit for generating the transaction request information according to the purchase list provided by the client device, and sending the transaction request information to the authorization service subsystem, in which the transaction request information comprises at least an identification number of the digital content and a unique identifier of the sale subsystem; and
a first transaction information recording unit for recording the transaction success information received from the authorization service subsystem.

3. The digital content counting system according to claim 2, **characterized in that** the first authentication unit is also used to authenticate the identity of the transaction clearing subsystem.

4. The digital content counting system according to claim 3, **characterized in that** the first authentication information storage unit is also used to store a confirmation state of the authentication after the identity of the transaction clearing subsystem passes the authentication of the first authentication unit.

5. The digital content counting system according to claim 4, **characterized in that** the first transaction information recording unit is also used to send the transaction success information, the unique identifier of the sale subsystem and the unique identifier of the authorization service subsystem to the transaction clearing subsystem.

6. The digital content counting system according to claim 1, **characterized in that** the authorization service subsystem further comprises:
a second authentication unit for authenticating the identities of the sale subsystem and the transaction clearing subsystem;
a second authentication information storage unit for storing a confirmation state of the authentication and a unique identifier of the sale subsystem after the sale subsystem passes the authentication of the second authentication unit, and storing a confirmation state of the authentication after the transaction clearing subsystem passes the authentication of the second authentication unit;
a transaction request authentication unit for generating, after receiving and confirming the transaction request information sent by the authenticated sale subsystem, the transaction success information according to the transaction request information, sending the transaction success information to the sale subsystem and the authenticated transaction clearing subsystem, and sending the transaction success information and the information of an approach for obtaining an authorization file for the digital content to the client device, in which the transaction success information comprises at least a transaction order number and an identification number of the digital content; and
a second transaction information recording unit for recording the transaction request information.

7. The digital content counting system according to claim 6, **characterized in that** the transaction request authentication unit is also used to send the unique identifier of the authorization service subsystem and the unique identifier of the sale subsystem to the transaction clearing subsystem.

8. The digital content counting system according to claim 6, **characterized in that** the authorization service subsystem further comprises:
an authorization file issue unit for, after the transaction request authentication unit sends the transaction success information and the information of an approach for obtaining an authorization file for the digital content to the client device, generating the authorization file of the digital content according to the authorization request information provided by the client device, and issuing the authorization file to the client device, wherein the authorization request information comprises at least identifier of the purchaser and order information, and the order information comprises at least the transaction order number and the identification number of the digital content.

9. The digital content counting system according to claim 1, **characterized in that** the transaction clearing subsystem further comprises:
a third authentication unit for authenticating the identities of the sale subsystem and the authorization service subsystem;
a third authentication information storage unit for storing a confirmation state of the authentication and a unique identifier of the sale subsystem after the sale subsystem passes the authentication of the third authentication unit, and storing a confirmation state of the authentication and a unique identifier of the authorization service subsystem after the authorization service subsystem passes the authentication of the third authentication unit; and
a third transaction information recording unit for recording the transaction success information received from the authorization service subsystem.

10. The digital content counting system according to claim 9, **characterized in that** the third transaction information recording unit is also used to record the unique identifier of the authorization service subsystem and the unique identifier of the sale subsystem received from the authorization service subsystem.

11. A sale subsystem for digital content counting, which is **characterized in** comprising:
a first authentication unit for authenticating the identity of an authorization service subsystem;
a first authentication information storage unit for storing a confirmation state of the authentication and a unique identifier of the authorization service subsystem after the authorization service subsystem passes the authentication of the first authentication unit;
a transaction request unit for generating transaction request information according to a purchase list provided by a client device, sending the transaction request information to the authorization service subsystem, in which the transaction request information comprises at least an identification number of the digital content and a unique identifier of the sale subsystem; and
a first transaction information recording unit for recording transaction success information received from the authorization service subsystem.

12. The sale subsystem according to claim 11, **characterized in that** the first authentication unit is also used to authenticate the identity of a transaction clearing subsystem.

13. The sale subsystem according to claim 12, **characterized in that** the first authentication information storage unit is also used to store a confirmation state of the authentication after the identity of the transaction clearing subsystem passes the authentication of the first authentication unit.

14. The sale subsystem according to claim 13, **characterized in that** the first transaction information recording unit is also used to send the transaction success information, the unique identifier of the sale subsystem and the unique identifier of the authorization service subsystem to the transaction clearing subsystem.

15. An authorization service subsystem for digital content counting, which is **characterized in** comprising:
a second authentication unit for authenticating identities of a sale subsystem and a transaction clearing subsystem;
a second authentication information storage unit for storing a confirmation state of the authentication and a unique identifier of the sale subsystem after the sale subsystem passes the authentication of the second authentication unit, and storing a confirmation state of the authentication after the transaction clearing subsystem passes the authentication of the second authentication unit;
a transaction request authentication unit for generating, after receiving and confirming transaction request information sent by the authenticated sale subsystem, transaction success information according to the transaction request information, sending the transaction success information to the sale subsystem and the authenticated transaction clearing subsystem, sending the transaction success information and information of an approach for obtaining an authorization file for the digital content to a client device, in which the transaction success information comprises at least a transaction order number and an identification number of the digital content; and
a second transaction information recording unit for recording the transaction request information.

16. The authorization service subsystem according to claim 15, **characterized in that** the transaction request authentication unit is also used to send the unique identifier of the authorization service subsystem and the unique identifier of the sale subsystem to the transaction clearing subsystem.

17. The authorization service subsystem according to claim 15, **characterized in that** the authorization service subsystem further comprises:
an authorization file issue unit for, after the transaction request authentication unit sends the transaction success information and the information of an approach for obtaining an authorization file for the digital content to the client device, generating the authorization file of the digital content according to the authorization request information provided by the client device, and issuing the authorization file to the client device, wherein the authorization request information comprises at least identifier of the purchaser and order information, and the order information comprises at least the transaction order number and the identification number of the digital content.

18. A transaction clearing subsystem for digital content counting, which is **characterized in** comprising:
a third authentication unit for authenticating identities of a sale subsystem and an authorization service subsystem;
a third authentication information storage unit for storing a confirmation state of the authentication and a unique identifier of the sale subsystem after the sale subsystem passes the authentication of the third authentication unit, and storing a confirmation state of the authentication and a unique identifier of the authorization service subsystem after the authorization service subsystem passes the authentication of the third authentication unit; and
a third transaction information recording unit for recording transaction success information received from the authorization service subsystem.

19. The transaction clearing subsystem according to claim 18, **characterized in that** the third transaction information recording unit is also used to record the unique identifier of the authorization service subsystem and the unique identifier of the sale subsystem received from the authorization service subsystem.

20. A method for counting digital contents by using the digital content counting system according to claim 1, which is **characterized in** comprising the following steps:
a sale subsystem and an authorization service subsystem authenticate identities with each other; the authorization service subsystem and a transaction clearing subsystem authenticate identities with each other; the transaction clearing subsystem authenticates identity of the sale subsystem;
the authenticated sale subsystem generates transaction request information according to a purchase list provided by a client device, and sends the transaction request information to the authenticated authorization service subsystem;
the authorization service subsystem, after receiving and confirming the transaction request information, generates transaction success information according to the transaction request information, sends the transaction success information to the sale subsystem and the authenticated transaction clearing subsystem, and sends the transaction success information and information of an approach for obtaining an authorization file for the digital content to the client device; and
the authorization service subsystem records the transaction request information, and the sale subsystem and the transaction clearing subsystem receive and record the transaction success information.

21. The method for counting digital contents according to claim 20, **characterized in that** when the purchase list provided by the client device comprises at least two digital contents, the authenticated sale subsystem generates one piece of transaction request information with respect to each of the digital contents, respectively, and sends all of the generated transaction request information to the authenticated authorization service subsystem.

22. The method for counting digital contents according to claim 21, **characterized in that** the authorization service subsystem, after receiving and confirming each of the transaction request information, generates transaction success information with respect to each of the transaction request information, respectively, sends all of the transaction success information to the sale subsystem and the authenticated transaction clearing subsystem, and sends all of the transaction success information and information of an approach for obtaining the authorization file for the digital content to the client device.

23. The method for counting digital contents according to claim 20, **characterized in that** the authorization service subsystem, after sending the transaction success information and the information of an approach for obtaining the authorization file for the digital content to the client device, the authorization service subsystem generates an authorization file according to authorization request information provided by the client device, and issues the authorization file to the client device, wherein the authorization request information comprises at least identifier of the purchaser and order information, and the order information comprises at least the transaction order number and the identification number of the digital content.

24. The method for counting digital contents according to claim 23, **characterized in that** the authorization file issued from the authorization service subsystem to the client device is bound with the identifier of the purchaser.

25. The method for counting digital contents according to claim 24, **characterized in that** the identifier of the purchaser comprises a characteristic value of the client device.

26. The method for counting digital contents according to claim 20, **characterized in that** the transaction request information comprises at least an identification number of the digital content and a unique identifier of the sale subsystem, and the transaction success information comprises at least the transaction order number and the identification number of the digital content.

27. The method for counting digital contents according to claim 20, **characterized in that** before the sale subsystem generates transaction request information according to the purchase list provided by the client device, the method further comprises that the sale subsystem authenticates the identity of the transaction clearing subsystem.

28. The method for counting digital contents according to claim 27, **characterized in that** the sale subsystem sends the transaction success information to the authenticated transaction clearing subsystem.

29. The method for counting digital contents according to claim 20, **characterized in that**,
the authorization service subsystem and the transaction clearing subsystem store a confirmation state of the authentication after passing the identity authentication with each other, respectively, and the transaction clearing subsystem stores a unique identifier of the authorization service subsystem;
the authorization service subsystem and the sale subsystem respectively store a confirmation state of the authentication and a unique identifier of the counterpart after the identities of the authorization service subsystem and the sale subsystem pass the authentication each other respectively;
the transaction clearing subsystem stores a confirmation state of the authentication and a unique identifier of the sale subsystem after the identity of the sale subsystem passes the authentication of the transaction clearing subsystem.

30. The method for counting digital contents according to claim 29, **characterized in that** when the authorization service subsystem sends the transaction success information to the transaction clearing subsystem, the authorization service subsystem sends the unique identifier of the authorization service subsystem and the unique identifier of the sale subsystem to the transaction clearing subsystem, and the transaction clearing subsystem receives and records the unique identifier of the authorization service subsystem and the unique identifier of the sale subsystem.
